(19) Europäisches Patentamt
European Patent Office
Office européen des brevets

(11) **EP 3 195 181 B1**

(12) **FASCICULE DE BREVET EUROPEEN**

(45) Date de publication et mention
de la délivrance du brevet:
**03.04.2019 Bulletin 2019/14**

(21) Numéro de dépôt: **15734221.3**

(22) Date de dépôt: **18.06.2015**

(51) Int Cl.:
*G06K 1/00* *(2006.01)*    *G06Q 20/32* *(2012.01)*
*H04B 5/00* *(2006.01)*    *H04B 13/00* *(2006.01)*

(86) Numéro de dépôt international:
**PCT/FR2015/051620**

(87) Numéro de publication internationale:
**WO 2016/001506 (07.01.2016 Gazette 2016/01)**

(54) **DISPOSITIF DE VALIDATION D'UNE TRANSACTION LORS D'UNE COMMUNICATION RADIO METTANT EN ŒUVRE LE CORPS HUMAIN**

VORRICHTUNG ZUR VALIDIERUNG EINER TRANSAKTION WÄHREND DER FUNKKOMMUNIKATION UNTER VERWENDUNG DES MENSCHLICHEN KÖRPERS

DEVICE FOR VALIDATING A TRANSACTION DURING RADIO COMMUNICATION USING THE HUMAN BODY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.06.2014 FR 1456235**

(43) Date de publication de la demande:
**26.07.2017 Bulletin 2017/30**

(73) Titulaire: **Orange**
**75015 Paris (FR)**

(72) Inventeurs:
• **LEVIONNAIS, Philippe**
  **F-14000 Caen (FR)**
• **BLIN, Valentin**
  **F-72000 Le Mans (FR)**

(56) Documents cités:
**WO-A1-2014/026616**

**Description**

L'invention concerne les communications sans fil à courte portée pour la transmission de données entre deux dispositifs par l'intermédiaire du corps humain. Plus précisément, l'invention porte sur un système pour effectuer des transactions entre un dispositif portatif et une station de base, connectée par exemple à un serveur de transactions, en utilisant la capacité de conductivité du corps humain pour transmettre les ondes électromagnétiques porteuses de telles communications sans fils.

Etat de la technique

Les communications en champ proche, usuellement connues sous le sigle « NFC » (pour « Near Field Communication »), basées principalement sur la norme ISO (International Standard Organisation) 14443, utilisent des technologies sans fil pour permettre un échange d'informations entre deux périphériques éloignés d'une courte distance, typiquement inférieure à dix centimètres. Les communications de ce type offrent de nombreuses applications, par exemple dans les domaines du paiement ou du transport. Le récepteur en champ proche reçoit un message de la part de l'émetteur en champ proche. Un tel message peut correspondre, dans le contexte précité, à l'échange d'un ticket (de spectacle, de transport, etc.), au paiement ou à la validation d'une transaction, etc.

On connaît dans l'état de la technique un système permettant d'échanger de tels messages en utilisant la capacité de conductivité du corps humain pour transmettre les ondes électromagnétiques porteuses de telles communications sans fils.

Le document WO 2014/026616 A1 décrit une méthode de communication NFC. La demande de brevet internationale publiée sous le numéro WO2012/131224 décrit un système de communication comprenant un dispositif émetteur portatif dont l'antenne est directement en contact avec, ou très proche, de l'utilisateur, que l'on appelle ici le « porteur ». Le signal est modulé au moyen d'un modulateur basse fréquence et transmis à travers le corps de l'utilisateur. Il est en effet connu que le corps humain présente des capacités de conduction adaptées pour véhiculer de tels signaux électromagnétiques dès lors que l'antenne est située à proximité (à moins de quelques centimètres) du corps de l'utilisateur et conçue de manière à rendre l'objectif attendu ; elle est constituée à cet effet d'un ensemble de spires en nombre et disposition adéquats pour émettre de façon optimale l'onde à travers le corps humain. Par la suite, un dispositif NFC équipé d'une telle antenne sera appelé dispositif « Bodypass », en référence à la validation d'une communication à travers le corps humain, de traduction anglaise « body».

Ce système selon l'état de l'art comporte aussi un récepteur qui comprend une surface sensitive constituée d'une antenne de même type que celle de l'émetteur et sur laquelle l'utilisateur peut poser la main. Le dispositif récepteur reçoit le signal du fait du contact physique de l'utilisateur avec l'antenne. Le signal reçu est démodulé et transmis à l'équipement adapté pour effectuer des traitements, en l'espèce pour mettre en oeuvre la transaction (paiement, ouverture de porte, etc.)

Cependant, une telle architecture n'assure pas la validité de la transaction.

Le porteur lui-même peut valider une transaction par erreur : s'il s'approche suffisamment de la station de base, aussi appelée dans la suite « borne », celle-ci rentre dans la portée directe de son émetteur et peut donc interpréter l'onde reçue alors que l'utilisateur n'a pas approché la main de la station de base. On appelle par la suite « signal fortuit » le signal associée à cette onde échangée directement entre les deux antennes *Bodypass* sans passer par le corps humain. Il est fortuit dans le sens où il peut porter le bon message mais n'est pas transmis de la manière souhaitée.

Ce système n'assure pas non plus l'identification du porteur de l'émetteur. On entend ici par identification le fait de reconnaître le porteur du mobile. En effet, dans le système décrit ci-dessus, on peut imaginer qu'un second utilisateur, par exemple malveillant, utilise la transaction à son propre avantage : il peut bousculer le porteur au moment où celui-ci s'approche de la borne et profiter de la réception du signal fortuit par la borne pour passer la porte à la place du porteur, valider un achat, etc.

L'invention offre une solution ne présentant pas les inconvénients de l'état de la technique.

L'invention

L'invention est définie par les revendications. A cet effet, selon un aspect matériel, l'invention concerne un système de communication radio comprenant :

- un premier dispositif, dit dispositif émetteur, apte à émettre une onde porteuse radio ;
- un second dispositif, dit dispositif récepteur, apte à recevoir l'onde porteuse,
- l'onde porteuse étant destinée à être émise et reçue en utilisant des capacités de conduction d'onde électromagnétique du corps d'un utilisateur ;

caractérisé en ce que le second dispositif comporte également :

  ○ un moyen de réception d'un signal de validation de l'onde porteuse,
  ○ un moyen de validation de l'onde porteuse en fonction du signal de validation reçu,

le signal de validation étant obtenu par un mouvement de validation dudit utilisateur.

Selon l'invention, une onde porteuse radio est transmise à travers le corps d'un utilisateur d'un dispositif émetteur vers un dispositif récepteur. Cette onde porteuse porte un message qui peut être explicite (par exemple un message modulant la porteuse), ou implicite (par exemple l'onde porteuse non modulée). Dans les deux cas, on entend par « message » le message associé à l'onde porteuse.

Avantageusement selon l'invention, un signal de validation est généré suite à un mouvement de validation, ou mouvement volontaire de l'utilisateur. Par mouvement volontaire de l'utilisateur, on entend tout mouvement effectué consciemment par celui-ci dans le but de valider la transaction, typiquement un mouvement de main ou de bras, etc. Ainsi, la réception d'un signal de validation déclenché par l'utilisateur permet-elle de valider effectivement le message reçu par l'onde. Selon l'invention, il ne suffit plus, comme dans l'état de la technique, de transmettre le message associé à l'onde lui-même pour qu'une transaction (par exemple un paiement ou la consommation d'un ticket) soit prise en compte, mais il faut de surcroît une indication de validation protégeant l'utilisateur de toute manipulation erronée de sa part ou de la part d'un tiers. En effet, si l'utilisateur s'approche trop de l'interface radio du dispositif récepteur (borne réceptrice), un message fortuit peut être reçu par la borne directement, sans utiliser le corps humain comme vecteur de transmission, alors que l'utilisateur ne le souhaitait pas. L'invention permet de ne pas valider la transaction tant qu'un signal supplémentaire de validation n'a pas été reçu par la borne. Ce signal supplémentaire et l'onde porteuse doivent atteindre la borne ensemble afin que la borne les traite simultanément. Par exemple, les signaux sont synchrones, ou légèrement décalés dans le temps avec un recouvrement, ou se suivent de près dans le temps, etc. Naturellement, les rôles de l'émetteur et du récepteur peuvent être échangés lors d'une communication bidirectionnelle, les deux dispositifs disposant alors chacun d'un module d'émission et d'un module de réception.

Selon un mode de mise en oeuvre particulier de l'invention, un tel système de communication est en outre caractérisé en ce que :

- le premier dispositif est un terminal portatif équipé d'une antenne apte à émettre une onde porteuse radio à transmettre en utilisant des capacités de conduction d'onde électromagnétique du corps de l'utilisateur, ladite antenne se trouvant située à une distance inférieure à une première distance du corps de l'utilisateur ;
- le second dispositif est un terminal équipé d'une antenne apte à recevoir une onde porteuse radio transmise en utilisant des capacités de conduction d'onde électromagnétique du corps de l'utilisateur.

Selon ce mode de réalisation, l'utilisateur humain se trouve proche du dispositif émetteur, typiquement un téléphone portable (*smartphone*) équipé d'une antenne de type NFC « Bodypass » telle que définie au préalable et situé par exemple dans l'une de ses poches, un sac, etc. Le dispositif récepteur, typiquement une borne équipée d'une antenne de type NFC « Bodypass » est apte à recevoir le message porté par l'onde en provenance de l'émetteur et le signal de validation généré suite à l'action volontaire de l'utilisateur. La borne, recevant le message, et en présence du signal de validation, peut valider la transaction en toute sécurité et réaliser une action adéquate, comme par exemple le débit d'un ticket. L'utilisateur humain peut ainsi conserver son terminal mobile dans une poche sans le sortir pour le présenter à la borne mais doit néanmoins effectuer un geste volontaire pour valider la transaction, en assurant ainsi que celui qui valide la transaction est aussi celui qui porte le téléphone mobile. Les deux distances prédéterminées peuvent être différentes ou identiques. Elles correspondent approximativement à la distance opératoire d'un dispositif NFC standard (de l'ordre de quelques centimètres au maximum). Naturellement, si la communication est bidirectionnelle, les rôles respectifs du téléphone mobile et de la borne peuvent être échangés c'est-à-dire que la borne devient émettrice et le téléphone mobile récepteur.

Selon une variante de ce mode de mise en oeuvre particulier de l'invention, un tel système de communication est en outre caractérisé en ce que le moyen de réception du signal de validation est un capteur apte à détecter un mouvement de l'utilisateur et à générer le signal de validation.

Par capteur, on entend ici tout type de capteur de mouvement capable de générer un signal suite à une détection du mouvement de l'utilisateur : capteur photosensible qui détecte le fait que le porteur le recouvre de sa main ou d'un objet quelconque, capteur de mouvement de la main de l'utilisateur, capteur d'image ou de son généré par l'utilisateur dans une certaine position, etc.

Ce mode de réalisation offre l'avantage de valider simplement le message associé à l'onde porteuse. Dans l'exemple d'un capteur photosensible, il suffira au porteur de poser sa main sur la borne pour assurer simultanément la transmission de l'onde via son corps et la génération du signal de validation qui est dans ce cas le signal émis par exemple par la cellule photosensible à destination du microprocesseur de la borne. Ce signal supplémentaire et l'onde porteuse atteignent la borne simultanément, ou de manière légèrement décalée dans le temps, puisqu'ils sont déclenchés par le même geste de l'utilisateur. Avantageusement, il est donc aisé pour la borne de les traiter ensemble.

Selon une seconde variante de ce mode de mise en oeuvre particulier de l'invention, qui pourra être mis en oeuvre alternativement ou cumulativement avec la précédente, un tel système de communication est en outre caractérisé en ce que le moyen de réception du signal de validation est un moyen d'analyse de la puissance de l'onde porteuse, apte à détecter une caractéristique de l'évolution de ladite puissance et à générer le signal de validation en fonction de cette caractéristique.

Avantageusement selon cette variante, l'invention ne nécessite pas de moyen supplémentaire de validation, comme le capteur de la variante précédemment exposée : c'est en effet l'analyse de l'onde porteuse elle-même qui conduit à valider ou non la transaction liée au message. Grâce à ce mode de réalisation, un seul mouvement volontaire du porteur de l'émetteur de l'onde (l'utilisateur du smartphone) peut transmettre à la borne à la fois le message associé à l'onde porteuse et le signal de validation. L'utilisateur peut notamment poser sa main sur le dispositif récepteur (ou l'effleurer) pour lui transmettre l'onde porteuse via son corps. La puissance du signal reçu, qui est différente de la puissance d'un signal fortuit qui serait reçu directement par l'antenne NFC de la borne, permet de prendre en compte la validation de l'opération par l'utilisateur.

De surcroît cette variante empêche un utilisateur malveillant de faire fonctionner le capteur à son avantage. On s'affranchit en effet du problème qui se pose lorsque l'utilisateur s'approche trop du dispositif récepteur qui peut alors recevoir le signal fortuit, puisque dans un tel cas la transaction ne sera néanmoins pas validée tant que le porteur n'aura pas approché sa main en dessous d'une certaine distance de la borne réceptrice. Concrètement, ce mouvement volontaire pourra prendre la forme d'un contact ou effleurement de la surface sensitive hébergeant l'antenne, mouvement réalisé de surcroît avec une certaine vitesse de la main, témoignant d'un geste volontaire. Le signal de validation fait ici avantageusement partie intégrante de l'onde porteuse, leur synchronisation rendant particulièrement aisé leur traitement simultané par la borne.

Ainsi, ce mode de réalisation offre l'avantage de la validation de la transaction et l'identification du porteur du fait de la synchronisation naturelle entre l'onde porteuse et le signal de validation ; en effet, si une autre personne pose la main sur l'antenne de la borne réceptrice il ne génèrera pas de modification de la puissance de l'onde porteuse et il n'y aura donc pas de validation de la transaction.

Selon une troisième variante de ce mode de mise en oeuvre particulier de l'invention, qui pourra être mise en oeuvre alternativement ou cumulativement avec les précédentes, le système de communication est caractérisé en ce que le moyen d'analyse de l'onde porteuse comprend un moyen de décision apte à valider l'onde porteuse lorsque la puissance de l'onde dépasse un seuil de prise en compte de la puissance.

Avantageusement selon cette variante, un geste volontaire de l'utilisateur peut être détecté : si le porteur s'approche trop de la borne et transmet par erreur le signal fortuit à celle-ci, ce signal reste de puissance relativement faible et la transaction n'est pas validée. En revanche, lorsque l'utilisateur entre en contact avec l'antenne de la borne ou l'effleure, la puissance du signal reçu via le corps humain subit une variation importante qu'il suffit alors de mesurer et prendre en compte lorsqu'elle dépasse un certain seuil fixé de manière à la distinguer d'un bruit ou d'un signal fortuit.

Selon une quatrième variante de ce mode de mise en oeuvre particulier de l'invention, qui pourra être mise en oeuvre alternativement ou cumulativement avec les précédentes, le système de communication est caractérisé en ce que le moyen d'analyse de la puissance de l'onde porteuse reçue comprend :

- un moyen de dérivation de l'onde porteuse pour obtenir un signal dérivé ;
- un moyen de décision en fonction du signal dérivé, apte à valider l'onde porteuse lorsque la dérivée dépasse un seuil de prise en compte du signal dérivé.

Avantageusement selon cette variante, un geste volontaire de l'utilisateur peut être détecté avec plus de sûreté : comme il est bien connu, la dérivée d'un signal dépasse un certain seuil seulement lorsque ledit signal subit une variation importante et rapide, proportionnelle ici à la vitesse du mouvement volontaire (la dérivée d'un signal étant en relation directe avec la pente de la fonction qui le supporte). Or, lorsque l'utilisateur approche sa main de la borne, la modification du signal est rapide en plus d'être importante, entraînant la dérivée à franchir le seuil prédéfini et la transaction à être validée. Si le porteur s'approche trop de la borne et transmet par erreur le signal fortuit porteur du message à celle-ci, le signal, non seulement reste de puissance relativement faible mais de surcroît ne subit pas de variation rapide et sa dérivée ne franchit pas le seuil de prise en compte du signal dérivé s'il est correctement prédéfini.

Ces deux vérifications cumulées, sur la puissance du signal selon la variante précédente et sur la dérivée selon la variante courante, garantissent une insensibilité aux signaux fortuits décrits ci-dessus, notamment grâce à la rapidité du geste volontaire de la main de l'utilisateur et l'augmentation de puissance apportée.

Selon une cinquième variante de ce mode de mise en oeuvre particulier de l'invention, qui pourra être mise en oeuvre alternativement ou cumulativement avec les précédentes, le système de communication est caractérisé en ce qu'il comporte en outre un moyen de débruitage de l'onde porteuse reçue.

Selon cette variante, le signal est nettoyé du bruit et des signaux parasites qui peuvent entacher d'erreur la mesure subséquente de la puissance ou de la dérivée du signal. La mesure, et donc la détection du geste volontaire, est ainsi plus fiable.

Selon une sixième variante de ce mode de mise en oeuvre particulier de l'invention, qui pourra être mise en oeuvre alternativement ou cumulativement avec les précédentes, le système de communication est caractérisé en ce que le seuil de prise en compte de la dérivée ou le seuil de la puissance de l'onde porteuse reçu sont calculés par un moyen d'analyse de l'onde porteuse reçue sur plusieurs échantillons en l'absence de geste volontaire de l'utilisateur.

Avantageusement selon cette variante, il est possible à certains moment privilégiés, comme par exemple à l'initialisation du système, c'est-à-dire lorsqu'on est certain que l'utilisateur n'a pas effectué de mouvement volontaire, de mesurer le bruit ambiant, de le dériver et d'en déduire les seuils appropriés à prédéfinir pour la future prise en compte de la dérivée et de la puissance du signal.

Selon un autre aspect matériel, l'invention concerne aussi un dispositif récepteur apte à recevoir une onde porteuse radio en utilisant des capacités de conduction d'onde électromagnétique du corps d'un utilisateur, ledit dispositif récepteur étant caractérisé en ce qu'il comporte également :

- un moyen de réception d'un signal de validation,
- un moyen de validation de l'onde porteuse en fonction du signal de validation reçu,

le signal de validation résultant d'un mouvement de validation dudit utilisateur.

Selon un aspect fonctionnel, l'invention porte également sur un procédé de réception d'une onde porteuse reçue en utilisant des capacités de conduction d'onde électromagnétique du corps d'un utilisateur, caractérisé en ce qu'il comporte les étapes de :

- Réception d'une onde porteuse radio,
- Réception d'un signal de validation résultant d'un mouvement de validation dudit utilisateur,
- Validation de l'onde porteuse reçue en fonction du signal de validation reçu.

L'invention porte également sur un programme chargeable dans la mémoire d'un dispositif, le programme comprenant des portions de code pour l'exécution des étapes du procédé selon l'invention, lorsque le programme est exécuté sur ledit dispositif récepteur.

L'invention concerne aussi un support de données partiellement ou totalement amovible, comportant des instructions de code de programme pour l'exécution des étapes d'un procédé de réception selon l'invention.

De nombreux détails et avantages de l'invention seront mieux compris à la lecture de la description d'un mode particulier de réalisation en référence aux schémas annexés donnés à titre non limitatif et dans lesquels :

- la figure 1 représente un système de communication sans fil selon un mode de réalisation de l'invention lorsque l'utilisateur n'accomplit pas de mouvement volontaire ;
- la figure 2 représente un système de communication sans fil selon un mode de réalisation de l'invention lorsque l'utilisateur accomplit un mouvement volontaire ;
- la figure 3 représente un exemple de réalisation d'un dispositif portatif selon l'invention ;
- la figure 4 représente un exemple de réalisation d'une station de base selon l'invention ;

- la figure 5 représente les étapes d'un procédé entre la station de base et le dispositif portable selon un mode de réalisation de l'invention ;
- la figure 6 représente les étapes détaillées d'un procédé de détection de mouvement volontaire d'un utilisateur selon l'invention ;
- la figure 7 représente un exemple d'onde porteuse modulée par un message et du signal de validation ainsi que son signal dérivé dans le domaine spatio-temporel ;
- la figure 8 représente les mêmes signaux dans le domaine fréquentiel.

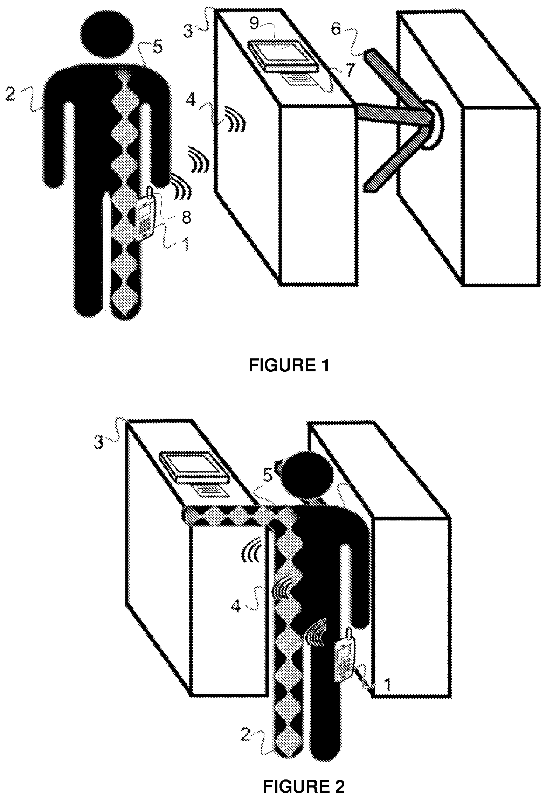

Les principes du procédé de communication sans fil à travers le corps humain entre un dispositif portatif porté par un utilisateur et une station de base, ou borne, selon un mode particulier de réalisation, vont maintenant être décrits en relation avec la figure 1 et la figure 2.

La figure 1 représente un système de communication sans fil selon un mode de réalisation de l'invention lorsque l'utilisateur n'accomplit pas de mouvement volontaire.

Un utilisateur (2) porteur d'un dispositif portatif (1) équipé d'un module NFC « Bodypass » tel que défini auparavant s'approche d'une station de base, ou borne (3).

Le dispositif portatif (1) selon l'invention est adapté pour émettre et éventuellement recevoir des signaux radioélectriques, que l'on appelle aussi ondes porteuses radio, via une antenne à travers le corps d'un utilisateur (2). A cette fin, le dispositif portatif (1) est situé à proximité de l'utilisateur (2), sans nécessairement être en contact direct avec celui-ci. Par exemple, le dispositif (1) est placé à l'intérieur d'une poche ou d'un sac porté contre l'utilisateur. Dans ces configurations, on estime que le dispositif portatif (1) n'est pas éloigné de plus de quelques centimètres du corps de l'utilisateur (2). La distance est par exemple inférieure à 10 cm. Le dispositif portatif (1) est équipé d'une batterie ou de piles, pour un fonctionnement autonome. Il s'agit par exemple d'un téléphone mobile équipé d'une antenne NFC utilisée comme antenne pour émettre et recevoir les signaux électriques modulés ou non modulés. Dans le contexte de cet exemple de réalisation, et comme déjà expliqué auparavant, l'antenne « Bodypass » (8) est conçue de manière à transmettre de façon optimale l'onde électromagnétique à travers le corps humain; elle est constituée à cet effet d'un ensemble de spires en nombre et disposition adéquats.

La station de base (3) est un équipement apte à émettre et recevoir des signaux radioélectriques, ou ondes porteuses, à travers le corps de l'utilisateur via une antenne « Bodypass » (7). Dans cet exemple de réalisation, la station de base (3) est une borne qui comprend une surface sensitive constituée par l'antenne (7) éventuellement protégée et adaptée pour réagir lorsque l'utilisateur l'effleure ou entre en contact avec elle, par exemple en posant la main dessus. La station de base (3) comprend aussi une interface utilisateur (9), aussi appelée IHM, destinée à afficher des messages à l'attention de l'utilisateur et un équipement (non représenté sur la figure 1) apte à effectuer des traitements, tel un PC ou un serveur. La surface sensitive recouvrant l'antenne, l'interface utilisateur et l'équipement sont connectés par exemple au moyen d'une liaison filaire, ou à travers un réseau, par exemple un réseau mobile, ou le réseau Internet.

L'utilisateur est par exemple dans un système de transports en commun et souhaite utiliser un service qui utilise des tickets de transport dématérialisés ; on parle habituellement d'application de « ticketing » : il a acheté un certain nombre de tickets de transport dont les droits sont inscrits sur son mobile, et il doit consommer un ticket pour pouvoir emprunter le moyen de transport, c'est-à-dire ici ouvrir le portillon (6) de la station de base associée au transport. Selon un autre exemple, l'utilisateur doit effectuer un paiement dont le montant s'affiche sur une interface de type (9). Dans les deux cas, l'application NFC installée sur le dispositif portable (1) transmet une demande d'ouverture de la transaction (paiement ou ticket) via un message, transformé en signal NFC. Par exemple, un message « BODYP » est émis sous forme de signal modulé pour signifier «je suis une application de type Bodypass ». Dans cet exemple le message (BODYP) module la porteuse de l'onde radio, mais on notera que cette modulation n'est pas nécessaire à l'invention : si l'onde porteuse n'est pas modulée, elle peut tout de même être utilisée telle quelle, comme il sera vu par la suite (puissance de la porteuse de l'onde, forme, etc.)

On notera que le dispositif portatif (1) peut à la fois réaliser des transactions NFC directes s'il est approché de la borne et également des transactions NFC « Bodypass » via le corps de l'utilisateur si celui-ci ne souhaite pas le sortir de sa poche. Le signal « Bodypass » (5) est représenté comme traversant le corps humain sous forme d'une onde et le signal direct, ou onde porteuse radio directe (4), dit signal fortuit, comme se déplaçant directement entre les deux antennes (7,8).

Deux options s'offrent à l'utilisateur. Il peut classiquement présenter son téléphone mobile directement à la borne, ce qui représente un certain nombre d'inconvénients : nécessité de prendre le téléphone en main, risque de vol, etc. Il peut aussi, et ceci l'affranchit des problèmes précités, laisser le téléphone dans sa poche et établir avec la borne un contact manuel. On rappelle que ce système de communication, utilisant les propriétés du corps humain pour conduire certains types d'ondes, et notamment les signaux radio de type NFC, est décrit par exemple dans la demande de brevet publiée sous le numéro WO2012/131224. Aucune limitation n'est attachée à ce exemple de signaux radio. Il peut également s'agir de l'Ultra Haute-Fréquence (UHF), de Supra Haute-Fréquence (SHS).

Dans le contexte qui nous intéresse, l'utilisateur s'approche donc de la borne (3) et pose sa main audessus de l'antenne (7) ; le signal modulé (5) porteur du message « Bodypass » est véhiculé par le corps de l'utilisateur jusqu'à la borne, démodulé, éventuellement décodé et analysé, et la transaction peut commencer.

Un problème se pose cependant lorsque le porteur s'approche de la borne d'une distance inférieure à la distance minimale nécessaire à la communication NFC : le dispositif portatif émet en permanence le message « Bodypass » et il se peut que, par inadvertance, la transaction soit validée indépendamment du souhait de l'utilisateur parce que la borne a reçu le signal fortuit (4) porteur du message fortuit. Dans un tel cas, la transaction est initialisée quand bien même l'utilisateur n'a pas eu l'intention de l'ouvrir. Quelqu'un d'autre peut en profiter à sa place (pour passer le portillon, valider un montant, etc.).

La figure 2 représente un système de communication sans fil selon un mode de réalisation de l'invention lorsque l'utilisateur accomplit un mouvement volontaire. Dans notre exemple, le mouvement volontaire consiste, assez classiquement, à poser sa main au-dessus de l'antenne (7) NFC de la borne (3) de façon volontaire, c'est-à-dire franchement et sans ambiguïté. Selon l'invention, le problème du signal fortuit mentionné ci-dessus est résolu de la manière suivante : le mouvement de l'utilisateur est détecté par le système sous forme d'un signal, dit signal de validation, et transmis à la borne.

Selon un premier exemple simple, un capteur photosensible peut être utilisé. Il est placé par exemple tout près de l'antenne de manière à ce que la main de l'utilisateur le recouvre en même temps que l'antenne (7). La différence de luminosité perçue par le capteur est alors transmise par le capteur à la borne, qui valide le message « Bodypass » reçu simultanément. Ainsi, le message ne peut être reçu que si l'utilisateur effectue le geste volontaire d'approcher sa main de la borne. Alternativement, ce capteur peut réaliser une reconnaissance d'empreinte digitale, une détection de mouvement, etc.

Cependant, ce premier exemple de réalisation ne résout pas le problème d'un autre utilisateur qui poserait sa main (ou un objet) sur le capteur lorsque le porteur du mobile serait à proximité directe de la borne NFC et ferait ainsi valider la transaction à son profit puisque dans un tel cas, l'onde porteuse correspondant au message « BODYP » fortuit serait reçu directement par l'antenne de la borne et le signal de validation du capteur serait généré simultanément.

Ce problème est résolu par un autre mode de réalisation de l'invention, selon lequel la borne analyse la puissance de l'onde porteuse reçue. Lorsque l'utilisateur pose la main de façon volontaire sur la borne, la puissance de l'onde reçue augmente de manière significative et la montée en puissance est assez rapide, de manière proportionnelle à la vitesse d'approche de la main de l'utilisateur. Cette variation de puissance peut constituer le signal de validation : si une augmentation rapide de puissance de l'onde porteuse véhiculant le message n'est pas détectée, la transaction n'est pas validée. Ainsi, la double condition « augmentation de puissance significative dans un intervalle de temps prédéterminé » puis « message d'identification de l'application reçu (« BODYP ») » permet non seulement de valider la transaction mais encore de s'assurer que c'est bien l'utilisateur qui porte le téléphone mobile qui a posé la main sur la borne, autrement dit d'effectuer une identification du porteur.

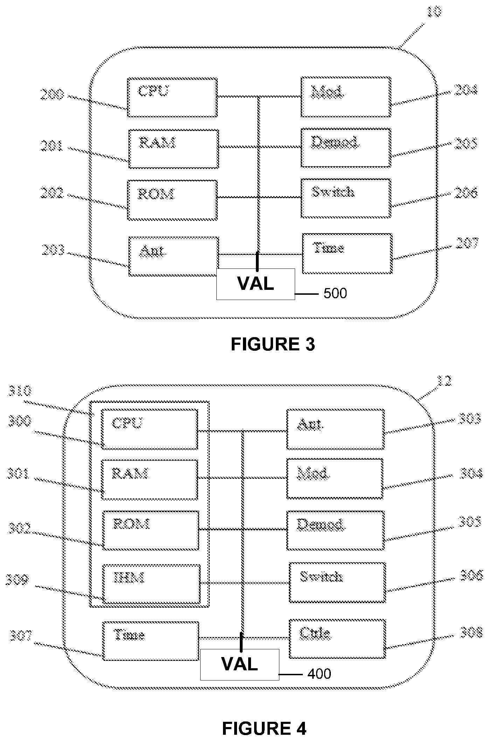

Un dispositif portatif 1 selon l'invention va maintenant être décrit en relation avec la figure 3.

Le dispositif portatif 1 comprend :

- une unité de traitement 200, ou « CPU » (pour « Central Processing Unit »), destinée à charger des instructions en mémoire, à les exécuter, à effectuer des opérations ;
- un ensemble de mémoires, dont une mémoire volatile 201, ou "RAM" (pour "Random Access Memory") utilisée pour exécuter des instructions de code, stocker des variables, etc. ;
- une mémoire non volatile 202, de type « ROM » (de l'anglais « Read Only Memory »), ou « EEPROM » (pour « Electronically Erasable Programmable Read Only Memory ») destinée à contenir des informations persistantes. Dans le cas d'un service de ticketing, cette mémoire peut être utilisée pour mémoriser le solde de tickets ;
- une antenne 203 « Bodypass » adaptée pour émettre et recevoir sur la voie radio et via le corps humain ;
- un modulateur 204 destiné à adapter si nécessaire un signal numérique produit par le microprocesseur 200 en un signal électrique modulé, destiné à être transmis via l'antenne 203. Dans l'exemple de réalisation décrit ici, l'opération de modulation effectuée par le modulateur 204 est une modulation d'amplitude par tout ou rien, appelée également modulation « OOK » (de l'anglais « On-Off Keying »). Ainsi, par exemple, le signal est un signal à 13,56 MHz modulé en amplitude tout ou rien. L'invention n'est cependant pas limitée à ce type de modulation. Dans un autre exemple de réalisation, la modulation est une modulation de fréquence, moins sensible aux parasites. On note que cette réalisation est cependant plus coûteuse car elle nécessite plus de composants. Dans un autre exemple de réalisation, une modulation de phase est réalisée. Le modulateur 204 est agencé pour mettre en oeuvre l'étape E6 de modulation du procédé de communication décrit par la suite ;
- un démodulateur 205, destiné à recevoir via l'antenne 203 un deuxième signal électrique modulé et à le transformer en un deuxième signal numérique destiné à être transmis à l'unité de traitement 200. Le démodulateur 205 est agencé pour mettre en oeuvre l'étape E12 de démodulation du procédé de communication décrit par la suite ;
- un commutateur 206 (en anglais, « switch ») adapté pour connecter alternativement le modulateur 204 à l'antenne 203 et le démodulateur 205 à l'antenne 203. Dans la première position, le dispositif portatif 1 est en mode réception, le commutateur 206 connecte l'antenne 203 au démodulateur 205. Sur détection du premier signal électrique modulé reçu via l'antenne 203, la détection étant une détection de niveau analogique, le commutateur commute et connecte l'antenne 203 au modulateur 204. Puis le commutateur 206 commute de nouveau pour connecter l'antenne 203 au démodulateur 205. Le dispositif portatif est alors en mode réception jusqu'à détecter et recevoir un nouveau signal électrique modulé.
- une horloge 207, optionnelle, destinée à coopérer avec le commutateur 206 pour alterner par exemple des périodes de temps prédéterminées en émission et en réception lors d'une communication bidirectionnelle.
- un circuit de validation 500 selon l'invention, destiné à valider un message reçu par l'analyse de l'onde porteuse, modulée ou non, et notamment sa puissance et l'amplitude de sa dérivée. Par exemple, selon ce mode de réalisation, ce circuit de validation comporte :

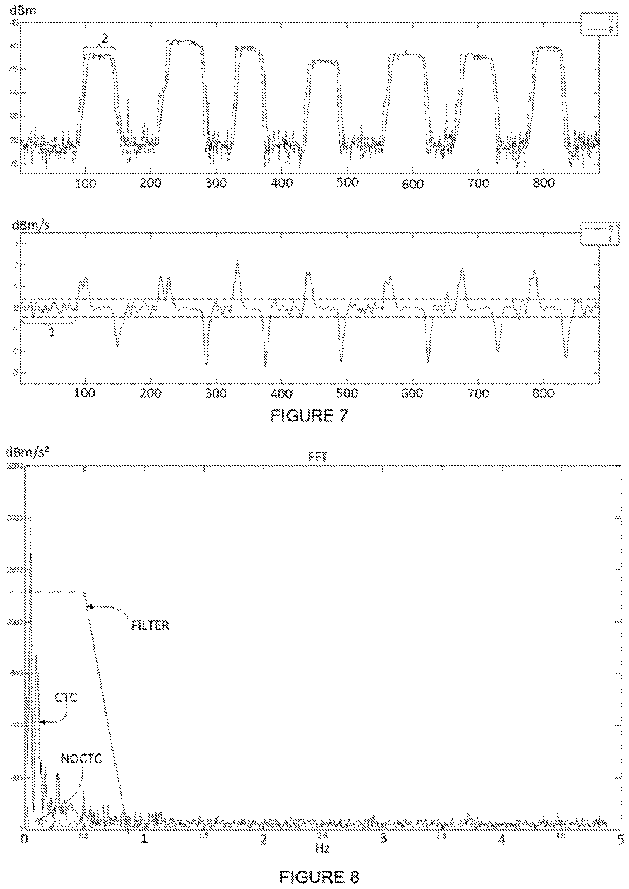

  • un filtre passe-bas pour « nettoyer » le signal bruité avant analyse, qui peut être par exemple un filtre de *Butterworth* avec une fréquence de coupure de 0.5Hz (voir figure 8) ;
  • un filtre dérivateur pour dériver le signal.

Le dispositif portatif (1) est de fonctionnement autonome, équipé d'une batterie ou de piles et de taille réduite de manière à être transporté par l'utilisateur. Le dispositif portatif (1) est par exemple un terminal mobile adapté pour mettre en oeuvre l'invention.

Une station de base (3) selon l'invention va maintenant être décrite en relation avec la figure 4.

La station de base (3), que l'on appelle plus communément «borne» dans le contexte NFC, comprend plusieurs modules qui sont similaires à ceux du dispositif portatif 1 décrit en relation avec la figure 3. Ainsi, la station de base (3) comprend :

- une unité de traitement 300, ou « CPU », destinée à charger des instructions en mémoire, à les exécuter, à effectuer des opérations.
- un ensemble de mémoires, dont une mémoire volatile 301, ou "RAM" (pour "Random Access Memory") utilisée pour exécuter des instructions de code, stocker des variables, etc.,
- un mémoire non volatile 302, de type « ROM » ou « EEPROM » destinée à contenir des informations persistantes ;
- une antenne 303 « Bodypass » adaptée pour émettre et recevoir sur la voie radio et via le corps humain ;
- un modulateur 304 destiné à adapter un signal numérique produit par le microprocesseur 300 en un premier signal électrique modulé, destiné à être transmis, via l'antenne 303, à travers le corps de l'utilisateur. Dans l'exemple de réalisation décrit ici, l'opération de modulation effectuée par le modulateur 304 est une modulation d'amplitude tout ou rien comparable à la modulation réalisée par le modulateur 204 du dispositif portatif (1) décrit en relation avec la figure 3. D'autres types de modulation sont possibles. D'une manière générale, la modulation effectuée par le modulateur 304 de la station de base 3 est la même que celle réalisée par le modulateur 204 du dispositif portatif (1). Le modulateur 304 est agencé pour mettre en oeuvre l'étape E2 d'émission du procédé de communication décrit par la suite ;

- un démodulateur 305, destiné à recevoir via l'antenne 303 un signal électrique modulé et à le transformer en un signal numérique destiné à être transmis à l'unité de traitement 300. Le démodulateur 305 est agencé pour mettre en oeuvre l'étape E12 de démodulation du procédé de communication qui sera décrit ultérieurement ;

- un commutateur 306, adapté pour connecter l'antenne 303 alternativement au modulateur 304 et au démodulateur 305.

- une horloge 307 destinée à coopérer avec le commutateur 306 de manière à ce que ce dernier passe de la position où il connecte l'antenne 303 au modulateur 304 à la position où il connecte l'antenne 303 au démodulateur 305.

- un circuit de validation 400 selon l'invention, destiné à valider le message reçu par l'analyse de l'onde porteuse modulée ou non et notamment sa puissance et l'amplitude de sa dérivée. Par exemple, selon ce mode de réalisation, ce circuit de validation comporte, comme celui de l'émetteur :

  • un filtre passe-bas pour « nettoyer » le signal bruité avant analyse, qui peut être par exemple un filtre de Butterworth avec une fréquence de coupure de 0.5Hz (voir figure 8) ;
  • un filtre dérivateur pour dériver le signal.

Alternativement, le calcul de la puissance et de la dérivée du signal peut se faire de manière complètement numérique.

La station de base (3) comprend également :

- une surface sensitive 308 adaptée pour réagir à un contact avec l'utilisateur ou à un simple effleurement de celui-ci. Dans l'exemple décrit ici, cette surface correspond à l'antenne 303, de manière à ce qu'un signal électrique modulé émis ou reçu via l'antenne 303 soit apte à être véhiculé par le corps de l'utilisateur qui est en contact avec la surface sensitive. Dans un exemple de réalisation, l'antenne 303 peut être intégrée dans la surface sensitive 308. La surface sensitive est agencée de manière à coopérer avec l'unité de traitement 300 pour mettre en oeuvre les étapes du procédé qui sera décrit ultérieurement ;

- une interface utilisateur 309, adaptée pour transmettre à l'utilisateur des instructions ou des messages d'information. Par exemple, l'interface utilisateur 309 est un écran sur lequel les messages et instructions sont affichés. Dans un autre exemple de réalisation, l'interface 309 est une interface audio permettant de jouer les messages et instructions. L'interface utilisateur 309 est agencée pour mettre en oeuvre notamment l'étapes E0 d'invitation du procédé de communication.

La station de base 3 est moins contrainte en termes d'alimentation et de taille que le dispositif portatif 1. Ainsi, les modules unité de traitement 300, mémoires volatile 301 et non volatile 302 et interface utilisateur 309 sont, dans un exemple de réalisation, intégrés dans un ordinateur 310 de type PC ou serveur qui peut être alimenté par le secteur. L'ordinateur 310 est interfacé avec les composants surface sensitive 308 couplée à l'antenne 303, modulateur 304, démodulateur 305, horloge 307, commutateur 306, un circuit de validation VAL, par exemple au moyen d'une interface filaire.

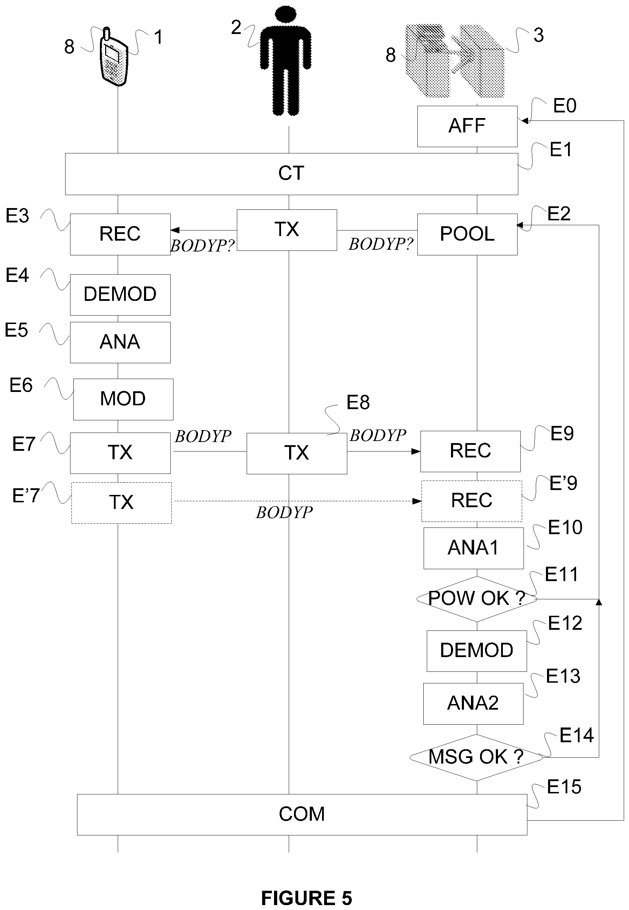

La figure 5 représente les étapes d'un procédé de communication sans fil bidirectionnelle à travers le corps humain entre un mobile (1) équipé d'une antenne « Bodypass » (8), porté par un utilisateur (2), et une station de base (borne, 3) équipée d'une antenne « Bodypass » (7), tels que déjà présentés à l'appui de la figure 2.

Dans une étape initiale E0 (AFF) d'invitation, l'utilisateur (2) équipé du dispositif portatif (1) approche de la station de base 3 et lit éventuellement un message affiché sur l'écran : montant d'une transaction, invite à poser sa main sur la surface sensitive de la station de base 3, etc.

Dans une étape suivante E1 (CT) de mise en contact, l'utilisateur 2 pose sa main au-dessus de l'antenne « Bodypass » de la station de base 3.

Au cours d'une étape E2 (POOL) d'émission, la station de base 3 émet via son antenne un signal électrique modulé associé à un message de recherche destiné à un dispositif situé à proximité de la station de base, en l'espèce le dispositif portatif (1) porté par l'utilisateur (2). Le message de recherche transmis dans le signal électrique modulé émis par la station de base (3) est destiné selon cet exemple à entrer en contact avec un dispositif portatif situé à proximité de la station (3). Il est propre au service. Plus précisément, le message de recherche comprend une pluralité d'éléments d'information destinés à être transmis en continu pendant une certaine période pendant laquelle la station de base 3 est en mode émission. Par exemple l'élément d'information consiste en un mot, « BODYP? », transmis plusieurs fois dans le premier signal électrique modulé. Au terme de la période d'émission, la station de base (3) passe en mode réception.

Dans une étape E3 (REC) de détection et de réception, le premier signal modulé électrique émis au cours de l'étape précédente est détecté et reçu par le dispositif portatif (1). En effet, l'utilisateur (2) dont la main est posée sur l'antenne (7) est un vecteur de transmission du premier signal électrique émis par la station de base (3). Le dispositif portatif (1), jusque-là en état d'attente, ou état de réception, détecte et reçoit le signal électrique modulé véhiculé par le corps de l'utilisateur. La détection et la réception du signal électrique modulé déclenche le passage du dispositif portatif (1) en mode émission pendant une certaine durée prédéfinie.

Dans une étape E4 (DEMOD) de démodulation, le dispositif portatif (1) démodule le premier signal électrique reçu en un premier signal numérique.

Dans une étape suivante E5 d'analyse (ANA), le dispositif portatif 1 analyse le signal numérique ainsi obtenu. Au cours de cette étape E5 d'analyse, le dispositif portatif 1 détecte au moins un des éléments d'information correspondant à l'interrogation de la station, à savoir dans cet exemple un service de type « Bodypass ». On remarquera qu'on a ici introduit une seule étape d'analyse simplifiée mais que l'analyse complète selon l'invention, telle que décrite aux étapes E10 à E14 pour la station de base, peut également être effectuée du côté du dispositif portatif lorsque celui-ci se trouve en réception.

Dans une étape E6 (MOD) de modulation, le message numérique associé à la réponse est utilisé pour moduler l'onde porteuse radio en un signal électrique modulé. On notera que les étapes E4 et E6 de modulation et démodulation sont facultatives dans le cas où le message est implicite, c'est-à-dire qu'il ne correspond pas à un message à proprement parler mais simplement à une information transportée par la porteuse du signal elle-même (on verra par la suite comment la puissance de cette porteuse peut suffire à valider ou non la transaction, sans la présence de message explicite).

Dans une étape suivante E7 (TX) de réponse, le message électrique modulé de réponse est transmis via l'antenne du dispositif portatif (1). De la même manière que précédemment, le signal électrique modulé est véhiculé par le corps de l'utilisateur au cours d'une étape (passive) notée E8.

Dans une étape E9 de détection et de réception, le signal électrique modulé S émis au cours de l'étape précédente E7 par le dispositif portatif (1) et transmis par le corps de l'utilisateur (2) est détecté et reçu par la station de base (3). En effet, l'utilisateur (2) dont la main est posée sur l'antenne de la borne est vecteur de transmission de ce signal électrique modulé.

Dans une étape E'9 de détection et de réception, représentée en pointillé, on imagine que le signal électrique Sf modulé émis au cours de l'étape précédente E'7 identique à E7 par le dispositif portatif (1) est détecté et reçu par la station de base (3). Il s'agit d'un signal fortuit selon notre terminologie, transportant le même message (BODYP) que le signal non fortuit, mais avec une puissance inférieure.

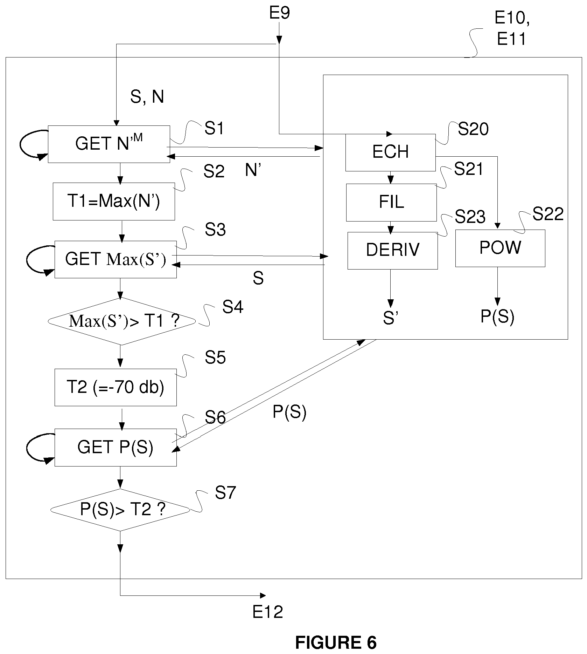

La station de base rentre au cours d'une étape E10 dans une étape d'analyse (ANA1) du signal reçu : si le porteur (2) a correctement posé sa main sur la station à proximité de l'antenne, l'onde porteuse S qui porte le message doit être reçue avec une puissance suffisamment élevée et qui de surcroît a augmenté rapidement, c'est-à-dire que le signal dérivé doit dépasser un certain seuil. Cette étape sera détaillée ultérieurement à l'appui des figures 6 à 8.

Le résultat de cette analyse est testé lors d'une étape E11. Le test peut porter sur la puissance intrinsèque ou relative du signal reçu, sur la valeur du signal simplement dérivé, doublement dérivé, ou sur toute autre méthode à la portée de l'homme du métier indiquant une variation assez rapide de la puissance du signal reçu.

Dans le cas du signal fortuit Sf issu de l'étape E'7, la puissance reste faible, le test échoue et l'algorithme revient par exemple à l'étape E2.

Si le test est réussi (par exemple la dérivée du signal S dépasse un certain seuil), la station de base 3 démodule le signal électrique modulé S en un signal numérique (message BODYP), dans une étape E12 de démodulation.

Dans une seconde étape E13 d'analyse (ANA2), la station de base (3) analyse le signal numérique ainsi obtenu. Au cours de cette étape E13 d'analyse, la station de base détecte au moins un des éléments de réponse attendu (ici, le message BODYP).

La station de base teste au cours d'une étape E14 si le message a été correctement analysé et correspond à une réponse attendue. Si ce n'est pas le cas, elle revient par exemple à l'étape E2.

Si la réponse est positive (on a bien reçu le message BODYP), la station de base peut entrer en communication (E15) avec le dispositif mobile (pour valider un solde de ticket, ouvrir la porte, valider un achat dont le montant est affiché sur la borne, ou échanger tout autre message requis pour la communication, etc.)

Bien sûr, l'utilisateur maintient la main posée sur la surface sensitive de la station de base depuis l'étape E1 de mise en contact de l'utilisateur avec la station de base (3) jusqu'à la fin de l'étape de communication (E15).

La figure 6 représente les étapes détaillées d'un procédé de détection de mouvement volontaire selon l'invention. Il s'agit du détail des étapes E10 (ANA1) et E11 (PWR OK) d'analyse de la puissance du signal modulé de la figure 5, dans le but de valider le message reçu et donc la transaction à venir.

Les sous-étapes S20 à S23 représentent une boucle d'échantillonnage qui est appelée plusieurs fois par l'algorithme principal (S1-S7) dans le but de calculer une valeur statistique (moyenne, puissance, etc.) relative au signal sur un nombre d'échantillons prédéfini (e.g. 100).

Lors d'une étape initiale S20, le signal (S) est échantillonné.

Lors d'une étape S21, le signal échantillonné est filtré par un filtre passe-bas pour le nettoyer de ses bruits. Un exemple de gabarit du filtre est donné en figure 8. Ce filtre peut être par exemple, comme il est bien connu de l'homme du métier, un filtre de Butterworth d'ordre 2 avec une pulsation normalisée de 0.05 pour une période d'échantillonnage de 100 millisecondes. Sa fonction de transfert prend donc la forme :

$$\frac{0.005543\,s^2 + 0.01109\,s + 0.005543}{s^2 - 1.779\,s + 0.8008}$$

Puis le signal filtré est dérivé au cours d'une étape S23.

En parallèle, la puissance moyenne P(S) du signal est calculée sur un nombre d'échantillons prédéterminé, par exemple 5, lors d'une étape S22.

On revient maintenant à l'algorithme principal qui fait appel à cette boucle aussi souvent que nécessaire (la boucle est symbolisée par une flèche arrondie sur le côté des étapes principales).

Lors d'une étape S1, par exemple à l'initialisation de la borne (lorsqu'on est certain que l'utilisateur n'a pas encore posé sa main sur l'antenne), une première estimation du signal est effectuée. Il s'agit uniquement de bruit, ou du signal fortuit puisque l'utilisateur n'a pas encore effectué de mouvement volontaire. La dérivée N' du bruit est calculée.

Lors d'une étape S2, on utilise ce signal N' pour calculer le seuil T1 de prise en compte du signal dérivé : il suffit de majorer la dérivée du signal de bruit (T1 = Max(N')) pour en avoir une approximation acceptable.

Lors d'une étape S3, une seconde estimation du signal est effectuée. Il s'agit cette fois du signal pertinent, c'est-à-dire de celui associé à l'onde porteuse radio en provenance du corps de l'utilisateur, puisqu'on suppose que celui-ci a effectué un mouvement volontaire en posant sa main au-dessus de l'antenne. La dérivée S' du signal est obtenue et son maximum Max(S') calculé.

Lors d'une étape S4 cette valeur Max(S') est comparée au seuil T1. Si la dérivée est supérieure au seuil, cela signifie que l'utilisateur a posé la main sur la borne, en faisant augmenter rapidement et significativement la puissance du signal ; on poursuit l'analyse. Sinon on arrête et on peut par exemple retourner en S3 pour une nouvelle analyse du signal, ou arrêter l'algorithme.

Lors d'une étape S5, le seuil de puissance T2 est obtenu ; il est fixé par exemple, dans ce mode de réalisation, à -70 dBm (Décibel - Milliwatt) ; il peut être estimé ou calculé selon tout procédé à la portée de l'homme du métier.

Lors d'une étape S6, on acquiert la puissance du signal, P(S).

Lors d'une étape S7, cette valeur P(S) est comparée au seuil T2. Si la puissance est supérieure au seuil, cela signifie que l'utilisateur a posé la main sur la borne, en faisant augmenter significativement la puissance du signal ; l'analyse est terminée, on passe à l'étape E12 suivante de l'algorithme général de la figure précédente (démodulation du signal). Sinon on arrête et on peut par exemple retourner en S3 pour une nouvelle analyse du signal, ou arrêter l'algorithme

La figure 7 représente le signal S associé à l'onde porteuse reçue (en haut de la figure) et son signal dérivé (en bas) dans le domaine spatio-temporel ;

Il s'agit d'un signal sensiblement périodique pendant lequel l'utilisateur porteur du mobile émetteur du signal pose et retire la main de la surface sensible de la borne (l'antenne). Les deux périodes s'enchaînent de la manière suivante :

- Période 1 : l'utilisateur n'a pas encore posé la main, le signal est de puissance relativement « faible » (autour de -70dBm) et il est bruité. Comme expliqué à l'appui de la figure précédente, une étape de filtrage enlève le bruit, puis le signal est dérivé et le maximum de la dérivée est calculé. Le seuil T1 est fixé au maximum du signal dérivé, avec éventuellement une majoration.
- Période 2 : l'utilisateur pose la main sur l'antenne : le signal augmente (passe à -50dB) brutalement et la dérivée enregistre un pic. Le pic dépasse le seuil T1 qui a été fixé. Le message peut donc être démodulé et validé.

La figure 8 représente les mêmes signaux dans le domaine fréquentiel. Une transformée de Fourrier (FFT) a été effectuée sur le signal.

Le signal FILTER représente un gabarit possible du filtre passe-bas.

Le signal CTC représente le spectre du signal acquis lorsque l'utilisateur a établi le contact avec la borne.

Le signal NOCTC représente le spectre du signal acquis lorsque l'utilisateur n'a pas de contact avec la borne.

Le filtre passe-bas utilisé pour le filtrage du bruit est un filtre de Butterworth de fréquence de coupure située aux alentours de 0.5Hz, facilement repérable sur la figure (FILTER). Toutes les fréquences parasites dues au bruit sont fortement atténuées par le filtre. Le signal avec contact (CTC) exhibe le spectre résultant du geste de la main alors que le signal sans contact (NOCTC) reste de puissance faible.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

## Revendications

1. Système de communication radio NFC comprenant :

- un premier dispositif (1), dit dispositif émetteur, apte à émettre une onde porteuse radio (S) ;
- un second dispositif (3), dit dispositif récepteur, apte à recevoir l'onde porteuse radio, via un moyen de réception (305) de l'onde porteuse, l'onde porteuse (S) étant destinée à être transmise entre les deux dispositifs en utilisant des capacités de conduction d'onde électromagnétique du corps d'un utilisateur apte à réaliser un mouvement de validation modifiant au moins une caractéristique (P(S)) de l'onde porteuse (S) reçue, **caractérisé en ce que** le second dispositif (3) comporte également :

- un moyen d'analyse (400) de l'onde porteuse (S) reçue par le moyen de réception, apte à détecter une caractéristique de l'évolution de la puissance (P(S)) de l'onde porteuse, modifiée par le mouvement de validation
- un moyen de validation (400) de l'onde porteuse en fonction de cette caractéristique.

2. Système de communication selon la revendication 1, **caractérisé en ce que** :

- le premier dispositif (1) est un terminal portatif équipé d'une antenne (8, 203) apte à émettre l'onde porteuse radio (S) en utilisant des capacités de conduction d'onde électromagnétique du corps de l'utilisateur, ladite antenne (8, 203) étant apte à être située à une distance inférieure à une première distance du corps de l'utilisateur ;
- le second dispositif (2) est un terminal équipé d'une antenne (7, 303) apte à recevoir l'onde porteuse radio (S) émise en utilisant des capacités de conduction d'onde électromagnétique du corps de l'utilisateur

3. Système de communication selon la revendication 1, **caractérisé en ce que** le moyen d'analyse (400) de l'onde porteuse (S) reçue comprend un moyen de décision apte à valider l'onde porteuse lorsque la puissance (P) dudit signal (S) dépasse un seuil (T2) de prise en compte de la puissance.

4. Système de communication selon la revendication 1, **caractérisé en ce que** le moyen d'analyse (400) de l'onde porteuse reçue (S) comprend :

- un moyen de dérivation de l'onde porteuse (S) pour obtenir un signal dérivé (S') ;
- un moyen de décision en fonction du signal dérivé (S'), apte à valider l'onde porteuse lorsque la dérivée dépasse un seuil (T1) de prise en compte du signal dérivé.

5. Système de communication selon la revendication 1 **caractérisé en ce qu'**il comporte en outre un moyen de débruitage de l'onde porteuse reçue.

6. Système de communication selon la revendication 3 ou la revendication 4 **caractérisé en ce que** le seuil de prise en compte de la dérivée (T1) ou le seuil de la puissance de l'onde porteuse (T2) sont calculés par un moyen d'analyse de l'onde porteuse reçue sur plusieurs échantillons en l'absence de geste volontaire de l'utilisateur.

7. Dispositif récepteur (3) NFC apte à recevoir une onde porteuse radio via un moyen de réception (305) de l'onde porteuse en utilisant des capacités de conduction d'onde électromagnétique du corps d'un utilisateur apte à réaliser un mouvement de validation, ledit mouvement de validation modifiant au moins une caractéristique (P(S)) de l'onde porteuse, ledit dispositif récepteur étant caractérisé en en ce qu'il comporte:

- un moyen d'analyse (400) de l'onde porteuse (S) reçue par le moyen de réception, apte à détecter une caractéristique de l'évolution de la puissance de l'onde porteuse, modifiée par le mouvement de validation ,
- un moyen de validation (VAL) de l'onde porteuse en fonction de cette caractéristique modifiée.

8. Procédé de réception NFC d'une onde porteuse radio (S) reçue en utilisant des capacités de conduction d'onde électromagnétique du corps d'un utilisateur apte à réaliser un mouvement de validation, ledit mouvement de validation modifiant au moins une caractéristique (P(S)) de l'onde porteuse et en ce qu'il comporte les étapes de :

- réception (E9) d'une onde porteuse radio (S),
- analyse (E10) de l'onde porteuse (S), apte à détecter une caractéristique de l'évolution de la puissance de l'onde porteuse, modifiée par le mouvement de validation,
- validation (E11, S4, S7) de l'onde porteuse en fonction de ladite caractéristique modifiée par le mouvement de validation.

9. Programme d'ordinateur apte à être mis en oeuvre sur un dispositif tel que défini dans la revendication 7, le programme comprenant des instructions de code qui, lorsque le programme est exécuté par un processeur, réalise les étapes du procédé défini selon la revendication 8.

**Patentansprüche**

1. NFC-Funkkommunikationssystem, umfassend:

    - eine erste Vorrichtung (1), die Sendevorrichtung genannt wird, die geeignet ist, eine Trägerradiowelle (S) zu senden;
    - eine zweite Vorrichtung (3), die Empfängervorrichtung genannt wird, die geeignet ist, die Trägerradiowelle über ein Mittel zum Empfangen (305) der Trägerradiowelle zu empfangen,

    wobei die Trägerwelle (S) dazu bestimmt ist, zwischen den zwei Vorrichtungen übertragen zu werden, indem die Fähigkeiten zum Leiten elektromagnetischer Wellen des Körpers eines Benutzers verwendet werden, der geeignet ist, eine Validierungsbewegung durchzuführen die mindestens ein Merkmal (P(S)) der empfangenen Trägerwelle (S) ändert, **dadurch gekennzeichnet, dass** die zweite Vorrichtung (3) auch aufweist:

    - ein Mittel zum Analysieren (400) der Trägerwelle (S), die von dem Mittel zum Empfangen empfangen wird, das geeignet ist, ein Merkmal der Entwicklung der Leistung (P(S)) der Trägerwelle zu erfassen, das durch die Validierungsbewegung geändert wird,
    - ein Mittel zum Validieren (400) der Trägerwelle in Abhängigkeit von diesem Merkmal.

2. Kommunikationssystem nach Anspruch 1, **dadurch gekennzeichnet, dass**:

    - die erste Vorrichtung (1) ein tragbares Endgerät ist, das mit einer Antenne (8, 203) ausgestattet ist, die geeignet ist, die Trägerradiowelle (S) zu senden, indem die Fähigkeiten zum Leiten elektromagnetischer Wellen des Körpers des Benutzers verwendet werden, wobei die Antenne (8, 203) geeignet ist, in einem Abstand, der kleiner als ein erster Abstand ist, vom Körper des Benutzers angeordnet zu werden;
    - die zweite Vorrichtung (2) ein Endgerät ist, das mit einer Antenne (7, 303) ausgestattet ist, die geeignet ist, die gesendete Trägerradiowelle (S) zu empfangen, indem die Fähigkeiten zum Leiten elektromagnetischer Wellen des Körpers des Benutzers verwendet werden.

3. Kommunikationssystem nach Anspruch 1, **dadurch gekennzeichnet, dass** das Mittel zum Analysieren (400) der empfangenen Trägerwelle (S) ein Mittel zum Entscheiden aufweist, das geeignet ist, die Trägerwelle zu validieren, wenn die Leistung (P) des Signals (S) einen Schwellenwert (T2) zum Berücksichtigen der Leistung überschreitet.

4. Kommunikationssystem nach Anspruch 1, **dadurch gekennzeichnet, dass** das Mittel zum Analysieren (400) der empfangenen Trägerwelle (S) aufweist:

    - ein Mittel zum Ableiten der Trägerwelle (S), um ein abgeleitetes Signal (S') zu erhalten;
    - ein Mittel zum Entscheiden in Abhängigkeit von dem abgeleiteten Signal (S'), das geeignet ist, die Trägerwelle zu validieren, wenn die Ableitung einen Schwellenwert (T1) zum Berücksichtigen des abgeleiteten Signals überschreitet.

5. Kommunikationssystem nach Anspruch 1, **dadurch gekennzeichnet, dass** es ferner ein Mittel zur Rauschunterdrückung der empfangenen Trägerwelle aufweist.

6. Kommunikationssystem nach Anspruch 3 oder 4, **dadurch gekennzeichnet, dass** der Schwellenwert zum Berücksichtigen der Ableitung (T1) oder der Schwellenwert der Leistung der Trägerwelle (T2) durch ein Mittel zum Analysieren der empfangenen Trägerwelle an mehreren Mustern in Abwesenheit von einer willentlichen Geste des Benutzers berechnet werden.

7. NFC-Empfängervorrichtung (3), die geeignet ist, eine Trägerradiowelle über ein Mittel zum Empfangen (305) der Trägerwelle zu empfangen, indem die Fähigkeiten zum Leiten elektromagnetischer Wellen des Körpers eines Benutzers verwendet werden, der geeignet ist, eine Validierungsbewegung durchzuführen, wobei die Validierungsbewegung mindestens ein Merkmal (P(S)) der Trägerwelle ändert, wobei die Empfängervorrichtung **dadurch gekennzeichnet, dass** sie aufweist:

    - ein Mittel zum Analysieren (400) der Trägerwelle (S), die von dem Mittel zum Empfangen empfangen wird, das geeignet ist, ein Merkmal der Entwicklung der Leistung der Trägerwelle zu erfassen, das durch die Validierungsbewegung geändert wird,
    - ein Mittel zum Validieren (VAL) der Trägerwelle in Abhängigkeit von diesem geänderten Merkmal.

8. NFC-Verfahren zum Empfangen einer Trägerradiowelle (S), die empfangen wird, indem die Fähigkeiten zum Leiten elektromagnetischer Wellen des Körpers eines Benutzers verwendet werden, der geeignet ist, eine Validierungsbewegung durchzuführen, wobei die Validierungsbewegung mindestens ein Merkmal (P(S)) der Trägerwelle ändert, und **dadurch gekennzeichnet, dass** es die Schritte aufweist:

    - des Empfangens (E9) einer Trägerradiowelle (S),

- des Analysierens (E10) der Trägerwelle (S), das geeignet ist, ein Merkmal der Entwicklung der Leistung der Trägerwelle zu erfassen, das durch die Validierungsbewegung geändert wird,
- des Validierens (E11, S4, S7) der Trägerwelle in Abhängigkeit von dem Merkmal, das durch die Validierungsbewegung geändert wird.

9. Computerprogramm, das geeignet ist, auf einer Vorrichtung, wie in Anspruch 7 definiert, umgesetzt zu werden, wobei das Programm Codeanweisungen aufweist, die, wenn das Programm von einem Prozessor ausgeführt wird, die Schritte des Verfahrens nach Anspruch 8 durchführen.

**Claims**

1. NFC radio communication system comprising:

   - a first device (1), termed an emitter device, that is capable of emitting a radio carrier wave (S);
   - a second device (3), termed a receiver device, that is capable of receiving the radio carrier wave via a means (305) for receiving the carrier wave,

   the carrier wave (S) being intended to be transmitted between the two devices by using the electromagnetic wave conduction capabilities of the body of a user, capable of performing a validating motion modifying at least one characteristic (P(S)) of the received carrier wave (S), **characterized in that** the second device (3) also includes:

   - a means (400) for analysing the carrier wave (S) received by the receiving means, which means is capable of detecting a characteristic of the variation in the power (P(S)) of the carrier wave, modified by the validating motion;
   - a means (400) for validating the carrier wave according to this characteristic.

2. Communication system according to Claim 1, **characterized in that**:

   - the first device (1) is a mobile terminal provided with an antenna (8, 203) that is capable of emitting the radio carrier wave (S) by using the electromagnetic wave conduction capabilities of the body of the user, said antenna (8, 203) being capable of being located at a distance that is shorter than a first distance away from the body of the user;
   - the second device (2) is a terminal provided with an antenna (7, 303) that is capable of receiving the emitted radio carrier wave (S) by using the electromagnetic wave conduction capabilities of the body of the user.

3. Communication system according to Claim 1, **characterized in that** the means (400) for analysing the received carrier wave (S) comprises a decision-making means that is capable of validating the carrier wave when the power (P) of said signal (S) exceeds a power recognition threshold (T2).

4. Communication system according to Claim 1, **characterized in that** the means (400) for analysing the received carrier wave (S) comprises:

   - a means for deriving the carrier wave (S) in order to obtain a derived signal (S');
   - a means for making a decision according to the derived signal (S'), which means is capable of validating the carrier wave when the derivative exceeds a derived signal recognition threshold (T1).

5. Communication system according to Claim 1, **characterized in that** it further includes a means for denoising the received carrier signal.

6. Communication system according to Claim 3 or Claim 4, **characterized in that** the carrier wave power threshold (T2) or derivative recognition threshold (T1) are calculated by a means for analysing the received carrier wave over a plurality of samples in the absence of a voluntary gesture on the part of the user.

7. NFC receiver device (3) that is capable of receiving a radio carrier wave via a means (305) for receiving the carrier wave by using the electromagnetic wave conduction capabilities of the body of a user, capable of performing a validating motion, said validating motion modifying at least one characteristic (P(S)) of the carrier wave, said receiver device being **characterized in that** it includes:

   - a means (400) for analysing the carrier wave (S) received by the receiving means, which means is capable of detecting a characteristic of the variation in the power of the carrier wave, modified by the validating motion;
   - a means (VAL) for validating the carrier wave according to this modified characteristic.

8. NFC method for receiving a radio carrier wave (S) received by using the electromagnetic wave conduction capabilities of the body of a user, capable of performing a validating motion, said validating motion modifying at least one characteristic (P(S)) of the carrier wave and in that it includes the steps of:

   - receiving (E9) a radio carrier wave (S);
   - analysing (E10) the carrier wave (S), which step is capable of detecting a characteristic of the variation in the power of the carrier wave, modified by the validating motion;
- validating (E11, S4, S7) the carrier wave according to said characteristic that is modified by the validating motion.

9. Computer program that is capable of being implemented on a device such as defined in Claim 7, the program comprising code instructions which, when the program is run by a processor, carry out the steps of the method defined in Claim 8.

FIGURE 1

FIGURE 2

**FIGURE 3**

**FIGURE 4**

**FIGURE 5**

**FIGURE 6**

dBm

FIGURE 7

dBm/s²                                           FFT

FILTER

CTC

NOCTC

0        0.5        1        1.5        2        2.5        3        3.5        4        4.5        5
                                        Hz

FIGURE 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014026616 A1

- WO 2012131224 A